# FASCICULE DE BREVET EUROPEEN

(11) **EP 2 382 112 B1**
(45) Date de publication et mention de la délivrance du brevet: **27.11.2013**
(21) Numéro de dépôt: 10706301.8
(22) Date de dépôt: 14.01.2010
(51) Int. Cl.: B60R 19/18, B60R 21/34, B62D 25/08

(54) **BOUCLIER AVANT DE VEHICULE AUTOMOBILE COMPORTANT UNE PARTIE CENTRALE RENFORCEE**
Hautpaneel einer Kraftfahrzeug-Vorderstruktur, das ein verstärkten Zentralbereich aufweist.
FRONT PROTECTIVE SKIN FOR AN AUTOMOBILE COMPRISING A REINFORCED CENTRAL PORTION

(30) Priorité: 23.01.2009 FR 0900306
(43) Date de publication de la demande: 02.11.2011
(73) Titulaire: Renault s.a.s., 78288 Guyancourt (FR)
(72) Inventeur: CHALLAL, Hicham, F-78000 Versailles (FR); VEUILLOT, Olivier, F-94450 Limeil Brevannes (FR)
(86) Numéro de dépôt international: PCT/FR2010/050053
(87) Numéro de publication internationale: WO 2010/084277

(56) Documents cités:
- FR-A- 2 875 771
- FR-A- 2 910 864
- US-B1- 7 192 068

## Description

La présente invention concerne un pare-choc avant, ou bouclier avant, de véhicule automobile, qui permet de réduire les blessures causées au niveau du haut de la jambe, et plus particulièrement, de la hanche d'un piéton, lorsque celui-ci est renversé par le véhicule.

Le document FR 2 875 771 décrit une armature de bouclier avant, qui comporte trois poutres parallèles. Ces poutres s'étendent parallèlement à la face avant du véhicule, lorsque l'armature est montée sur les longerons de ce dernier. La présence des trois poutres permet de diviser l'énergie du choc en trois zones qui sont disposées de manière à ce que le genou du piéton ne vienne pas en contact direct avec le bouclier. Ces poutres comportent un support sur lequel est monté un élément absorbeur de choc.

Le document FR 2910864 décrit un bouclier avant de véhicule tel que détaillé par le préambule de la revendication 1.

Dans un mode de réalisation décrit dans le document précité, la troisième poutre est apte à être disposée assez haut sur l'avant du véhicule, de manière à entrer en contact avec la hanche du piéton ou la tête du piéton, si celui-ci est un enfant ou un adulte de petite taille. L'élément absorbeur de choc qui équipe cette poutre permet de dissiper au moins une partie de l'énergie libérée lors du choc, afin de réduire les blessures causées au piéton.

Un but de la présente invention est de proposer une nouvelle structure de bouclier avant qui permet de réduire les blessures susceptibles d'être causées à la partie haute de la jambe d'un piéton (ou à la tête de ce dernier, s'il est de petite taille), lors d'un choc piéton.

Ce but est atteint au moyen d'un bouclier avant de véhicule automobile, apte à être monté sur l'avant d'une structure de véhicule automobile qui comporte une traverse avant, ledit bouclier présentant une partie centrale qui est apte à s'étendre au-dessus de ladite traverse avant et apte à être disposée au niveau du bord libre du capot dudit véhicule, ledit bouclier comportant un renfort de ladite partie centrale, ledit renfort comportant une poutre transversale qui s'étend sensiblement parallèlement à ladite partie centrale.

Selon l'invention, la poutre transversale est apte à se déformer lorsqu'une force supérieure à une valeur donnée est exercée sur elle et ledit renfort comporte au moins un jambage d'appui, sensiblement vertical, apte à se déformer lorsqu'une force supérieure à une valeur donnée est exercée sur lui, ledit jambage d'appui est apte à soutenir ladite poutre transversale et à être disposé sensiblement au-dessus ou sur ladite traverse avant, moyennant quoi, en cas de choc piéton, ladite poutre transversale fléchit vers ledit jambage d'appui et transmet les efforts audit jambage d'appui qui se déforme, en prenant appui sur ladite traverse avant, de manière à dissiper une partie de l'énergie du choc.

Selon l'invention, le jambage d'appui peut soutenir effectivement la poutre centrale ou être disposé sous cette dernière de manière à venir en contact avec elle, en cas de choc uniquement, pour la transmission des efforts.

Le nombre de jambages n'est pas limité selon l'invention et dépend de la taille du bouclier, en particulier de la dimension du bouclier qui correspond à la largeur du véhicule sur lequel peut être monté le bouclier.

Selon un mode de réalisation, le renfort comporte au moins un jambage avant, qui s'étend en avant dudit jambage d'appui pour former avec ledit jambage d'appui, une arche qui s'étend perpendiculairement à ladite poutre transversale. Là encore, ce jambage avant peut être solidaire de la poutre ou non, indépendamment du fait que le jambage d'appui soit, lui-même, solidaire ou non de la poutre transversale. Le jambage avant peut être solidaire du jambage d'appui.

Avantageusement, le renfort comporte une bande d'ancrage, sensiblement parallèle à ladite poutre transversale et solidaire de l'extrémité libre dudit jambage avant, ladite bande d'ancrage permet le montage dudit renfort à l'arrière dudit bouclier. Cette bande de renfort permet également de transmettre les efforts de la poutre à tous les jambages avant.

Avantageusement, ledit jambage avant et ledit jambage d'appui forment une seule pièce.

Avantageusement, le jambage avant, le jambage d'appui et ladite poutre transversale forment une seule et même pièce.

Selon un mode de réalisation, le bouclier comporte une armature rigide, recouverte d'une peau souple.

Selon un mode de réalisation, ledit jambage avant est disposé directement sous ladite peau et l'extrémité libre dudit jambage avant prend appui sur un rebord formé par ladite peau.

Le bouclier peut comporter un élément absorbeur de choc, apte à être disposé entre ledit bouclier avant et ladite traverse avant.

Les structures de la poutre transversale, du jambage d'appui et du jambage avant ne sont pas limitées selon l'invention, tant que celles-ci leur permettent de se déformer, en particulier, lors d'un effort en compression.

Selon un mode de réalisation, la poutre transversale et le jambage d'appui présentent une structure comportant des nervures qui leur permet de se déformer. Un structure gaufrée, formée de multiples cellules, peut également être utilisée sans sortir du cadre de la présente invention.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 représente une vue de côté de la zone d'un véhicule automobile qui vient au contact des jambes d'un piéton, lors d'un choc ;
- la Figure 2 représente une vue en perspective d'un mode de réalisation particulier de l'invention ;
- la Figure 3 représente une vue en coupe longitudinale du mode de réalisation représenté sur la Figure 2 ;
- la Figure 4 représente une vue partielle, en perspective de l'arrière du bouclier représenté sur les Figures 2 et 3 ; et
- les Figures 5a à 5c illustrent les déformations du bouclier de l'invention, lors d'un choc piéton.

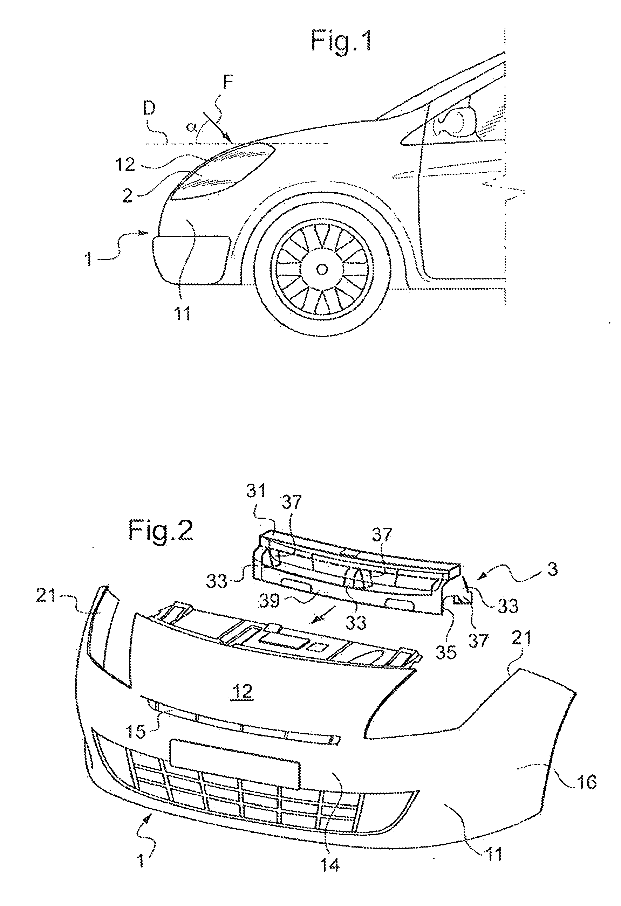

La Figure 1 représente une vue de côté de la portion avant d'un véhicule automobile. Ce véhicule présente un bouclier avant 1 et deux projecteurs avant 2. Le bouclier avant 1 comporte une partie centrale qui s'étend entre les deux projecteurs avant 2. On définit par D la direction longitudinale du véhicule qui est sensiblement horizontale et perpendiculaire à la partie avant du bouclier 1. Lors d'un choc piéton, le haut de la jambe (ou la hanche) du piéton vient exercer une force F sur le bouclier, entre les projecteurs 2. Cette force F forme un angle a, sensiblement égal à 45° avec la direction D.

En référence à la Figure 2, un premier mode de réalisation de l'invention va maintenant être décrit.

Le bouclier 1 comporte une partie basse 11, qui s'étend sous les ouvertures 21 qui sont destinées à recevoir les projecteurs avant 2, sur le véhicule monté. Une entrée d'air inférieure est ménagée dans la partie basse 11. Le bouclier 1 présente également une partie centrale 12, disposée entre les ouvertures 21 précitées et qui s'étend sensiblement verticalement, jusqu'au bord avant du capot, lorsque le bouclier 1 est monté sur un véhicule. Le bouclier 1 présente une face externe 14 et une face interne 16, tournée vers le véhicule. Une entrée d'air supérieure 15 est ménagée dans la portion basse de la partie centrale 12, entre les ouvertures 21. Cette entrée d'air supérieure 15 s'étend transversalement à la partie centrale 12, entre les deux ouvertures 21. Un renfort 3 est apte à être fixé sur la face interne 16 du bouclier, au niveau de la partie centrale 12 de ce dernier.

Le renfort 3 comporte une poutre transversale 31, qui lorsque le renfort 3 est monté sur le bouclier 1, s'étend parallèlement au bord haut de la partie centrale 12, c'est-à-dire parallèlement au bord libre du capot du véhicule. Des jambages 33 s'étendent sous la poutre transversale 31. Le renfort 3 comporte, dans le mode de réalisation particulier ici représenté, trois jambages 33 qui sont disposés, deux, aux extrémités de la poutre transversale 31, et un sensiblement au milieu de la poutre transversale 31. Chaque jambage 33 forme une arche qui s'étend selon une direction perpendiculaire à la poutre transversale 31, c'est-à-dire longitudinalement au véhicule, lorsque l'ensemble bouclier 1-renfort 3 est monté sur ce dernier. Le sommet de l'arche est solidaire de la poutre transversale 31. Chaque jambage 33 est formé d'un jambage avant 35, orienté vers le bouclier 1 et d'un jambage d'appui 37. Les jambages avant 35 présentent une extrémité libre, opposée à la poutre transversale 31. Les extrémités libres des jambages avant 35 sont reliées par une bande d'ancrage 39, parallèle à la poutre transversale 31. Cette bande d'ancrage 39 sert, d'une part, à la transmission des forces aux jambages 33 et, d'autre part, au montage du renfort 3 sur le bouclier 1. Dans le mode de réalisation ici représenté, la poutre transversale 31 et les jambages 33 forment une seule pièce qui est facile à clipper ou à emboîter sur la face arrière 16 du bouclier 1.

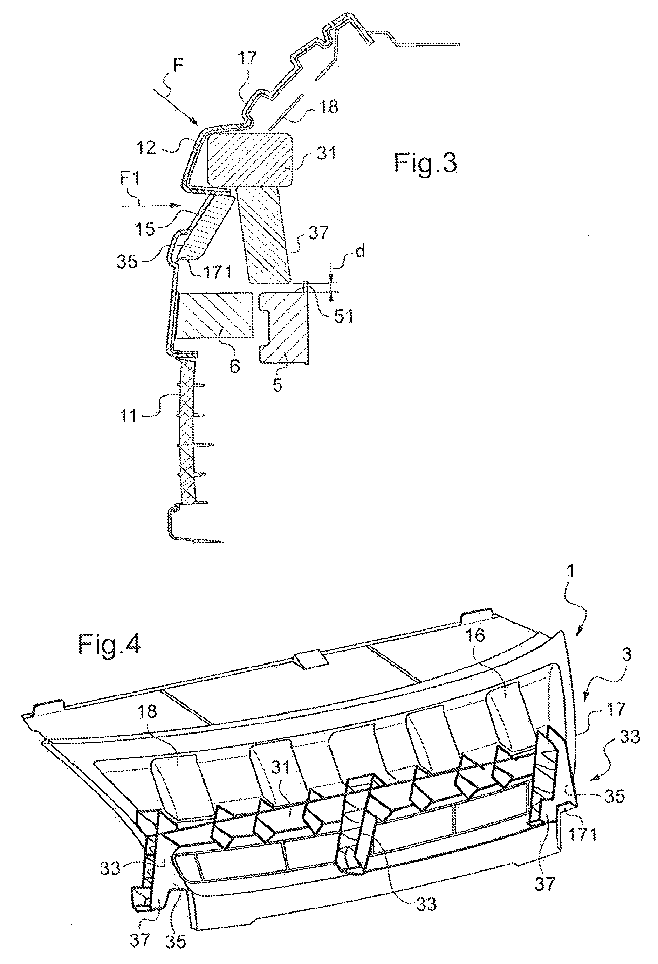

La Figure 3 représente une vue schématique, en coupe longitudinale du bouclier de la Figure 2, lorsque le renfort 3 est monté à l'arrière du bouclier 1 et que le bouclier ainsi formé est monté sur la structure d'un véhicule automobile. Le bouclier 1 est formé d'une peau 17, relativement souple et fine, en matière plastique. Cette peau 17 recouvre une armature 18, rigide qui est fixée sur la structure du véhicule. La structure du véhicule comporte une traverse avant 5 qui s'étend transversalement au véhicule. Cette traverse avant 5 présente une face supérieure 51, orientée vers le renfort 3. Un élément absorbeur de choc 6 est disposé en avant de la traverse avant 5, entre la traverse avant 5 et la face interne 16 du bouclier 1. La poutre transversale 31 du renfort 3 est logée dans un évidement formé par l'armature 18, au-dessus de la traverse avant 5 et de l'entrée d'air supérieure 15. Le jambage d'appui 37 s'étend depuis la poutre transversale 31 vers la face supérieure 51 de la traverse avant 5. Le jambage d'appui 37 présente une structure nervurée qui lui permet de se déformer (voir figure 4). L'extrémité libre du jambage d'appui 37 est disposée à une faible distance d, de l'ordre de 5 à 10 mm, au-dessus de la face supérieure 51 de la traverse avant 5. Le jambage avant 35 s'étend depuis le dessous de la poutre transversale 31, vers la face interne 16 du bouclier 1. Le jambage avant 35 est disposé sous la peau 17 du bouclier 1, qui à cet endroit ne comporte pas d'armature 18. Le jambage avant 35 s'étend sensiblement verticalement à travers l'entrée d'air supérieure 15. Son extrémité libre est disposée au-dessus de l'élément absorbeur de choc 6, sur un rebord 171, sensiblement horizontal formé par la peau 17. Le jambage avant 35 est sensiblement plus court que le jambage d'appui 37 et sa structure est également nervurée afin de lui permettre de se déformer. Le jambage avant 35 présente également une rigidité inférieure à celle du jambage d'appui 37.

Comme représenté sur la Figure 4, la poutre transversale 31 présente une structure nervurée. Elle comporte une nervure principale, horizontale, qui s'étend parallèlement au bouclier 1 et une pluralité de nervures verticales, espacées le long de la nervure principale et solidaires de cette dernière. Les jambages 33 présentent également une structure nervurée qui leur permet de se déformer. Les deux jambages d'extrémité 33 forment les extrémités de la poutre transversale 31. Le jambage d'appui 37 et le jambage avant 35 forment une seule et même pièce, reliée à la nervure principale de la poutre transversale 31. La bande d'ancrage n'est pas visible sur cette figure. Le jambage avant 35 vient en appui sur le rebord 171 formé par la peau 17.

Selon un autre mode de réalisation, la poutre transversale 31 et/ou les jambages 33 peuvent présenter une structure gaufrée qui leur permet également de se déformer.

Le fonctionnement de ce mode de réalisation particulier, va maintenant être décrit en référence aux Figures 1 à 5.

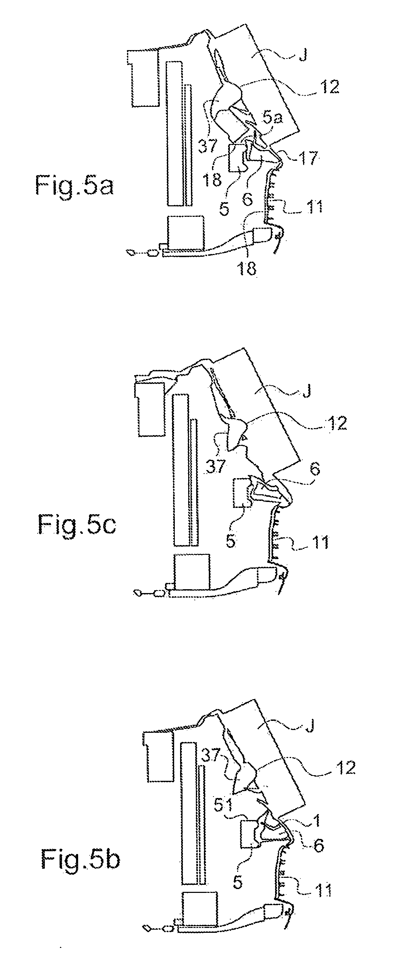

Sur la Figure 5, la jambe du piéton est matérialisée par le cylindre J.

Comme représenté sur la Figure 5a, la jambe J vient au contact avec la partie centrale du bouclier 1 selon un angle d'environ 45°. Dans un premier temps, comme représenté sur la Figure 5a, l'élément absorbeur de choc 6 absorbe une partie de l'énergie du choc, en même temps que les jambages avant 35 qui se plient sous l'effet de la force exercée par la jambe J (effort en compression). La bande d'ancrage 39 permet de transmettre les efforts à tous les jambages avant 35. Dans un second temps, représenté sur les Figures 5a et 5b, la poutre transversale 31 fléchit (travail en compression) vers la traverse avant 5, ce qui a pour effet de déformer les jambages d'appui 35. Ceux-ci se déplacent, tout d'abord, vers la traverse avant 5 (de la distance d) puis prennent appui sur la face supérieure 51 de cette dernière. Leur déplacement de la distance d permet de dissiper une partie de l'énergie du choc. Leur déformation, une fois qu'ils sont en appui sur la traverse avant 5, permet de dissiper une autre partie de l'énergie (plus importante) du choc.

Sur la Figure 5b, le jambage 33 est complètement déformé. C'est ensuite, comme représenté sur la Figure 5c, tout le reste du bouclier 1 qui se déforme.

Le passage de l'état normal du bouclier 1 à la configuration représentée sur les Figures 5a et 5b est très rapide. Les déformations de la peau 17, des jambages 33 et de la poutre transversale 31 permettent de dissiper la plus grande quantité de l'énergie libérée pendant le choc. Dans la suite du choc, comme représenté sur la Figure 5c, les efforts sont limités en intensité à un palier qui n'est pas dommageable pour la jambe du piéton.

A titre indicatif, la seule déformation de la peau 17, de la bande d'ancrage 39 et des jambages avant 35 permet de dissiper environ 150 KJ sur un choc qui libère au total 450 KJ.

Lorsque la jambe J vient directement en contact avec le bouclier 1, au niveau de la poutre transversale 31, cette dernière fléchit en premier vers la traverse 5. Les efforts qui s'exercent sur la poutre 31 sont transmis aux jambages 33 qui tout d'abord se déplacent vers la traverse avant 5 puis prennent appui sur cette dernière. Ils se déforment ensuite, comme précédemment exposé, sous l'effet de la compression. Dans ce cas, la présence des jambages avant 35 permet de dissiper, du fait de leur déformation, une certaine quantité d'énergie.

Dans le cas où se sont les jambages avant qui travaillent en premier, leur présence permet de faire travailler la poutre transversale 31 sans que celle-ci soit directement frappée lors du choc (cas d'un choc selon la flèche F1 représentée sur la figure 3). Le bouclier selon l'invention est ainsi efficace quel que soit le point d'impact premier et la direction d'impact.

## Revendications

1. Bouclier avant (1) de véhicule automobile, apte à être monté sur l'avant d'une structure de véhicule automobile qui comporte une traverse avant (5), ledit bouclier (1) présentant une partie centrale (12) qui est apte à s'étendre au-dessus de ladite traverse avant (5) et apte à être disposée au niveau du bord libre du capot dudit véhicule, ledit bouclier (1) comportant un renfort (3) de ladite partie centrale (12), ledit renfort (3) comportant une poutre transversale (31) qui s'étend sensiblement parallèlement à ladite partie centrale (12), ledit bouclier (1) étant **caractérisé en ce que**, ladite poutre transversale (31) est apte à se déformer lorsqu'une force supérieure à une valeur donnée est exercée sur elle et **en ce que** ledit renfort (3) comporte au moins un jambage d'appui (37), sensiblement vertical, apte à se déformer lorsqu'une force supérieure à une valeur donnée est exercée sur lui, **en ce que** ledit jambage d'appui (37) est apte d'une part, à soutenir ladite poutre transversale (31) et, d'autre part, à être disposé sensiblement au-dessus ou sur ladite traverse avant (5), moyennant quoi, en cas de choc piéton, ladite poutre transversale (31) fléchit vers ledit jambage d'appui (37) et transmet les efforts audit jambage d'appui (37) qui se déforme en prenant appui sur ladite traverse avant (5), de manière à dissiper une partie de l'énergie du choc.

2. Bouclier (1) selon la revendication 1, **caractérisé en ce qu'**il comporte au moins un jambage avant (35), qui s'étend en avant dudit jambage d'appui (37) pour former, avec ledit jambage d'appui (37), une arche qui s'étend perpendiculairement à ladite poutre transversale (31).

3. Bouclier (1) selon la revendication 2, **caractérisé en ce qu'**il comporte une bande d'ancrage (39), sensiblement parallèle à ladite poutre transversale (31) et solidaire de l'extrémité libre dudit jambage avant (35) et **en ce que** ladite bande d'ancrage (39) permet le montage dudit renfort (3) à l'arrière dudit bouclier (1).

4. Bouclier (1) selon l'une quelconque des revendications 2 et 3, **caractérisé en ce que** ledit jambage avant (35) et ledit jambage d'appui (37) forment une seule pièce.

5. Bouclier (1) selon l'une quelconque des revendications 2 à 4, **caractérisé en ce que** ledit jambage avant (35), ledit jambage d'appui (37) et ladite poutre transversale (31) forment une seule et même pièce.

6. Bouclier (1) selon l'une quelconque des revendications précédentes, **caractérisé en ce que** ledit bouclier (1) comporte une armature rigide (18), recouverte d'une peau (17) souple.

7. Bouclier (1) selon la revendication 6, **caractérisé en ce que**, ledit jambage avant (35) est disposé directement sous ladite peau (17) et **en ce que** l'extrémité libre dudit jambage avant (35) prend appui sur un rebord (171) formé par ladite peau (17).

8. Bouclier (1) selon l'une quelconque des revendications précédentes, **caractérisé en ce qu'**il comporte un élément absorbeur de choc (6), apte à être disposé entre ledit bouclier avant (1) et ladite traverse avant (5).

9. Bouclier (1) selon l'une quelconque des revendications précédentes, **caractérisé en ce que** ladite poutre transversale (31) et ledit jambage d'appui (37) présentent une structure comportant des nervures qui leur permet de se déformer.

## Patentansprüche

1. Vorderer Stoßfänger (1) eines Kraftfahrzeugs, der an die Vorderseite einer Kraftfahrzeugstruktur montiert werden kann, die einen vorderen Querträger (5) aufweist, wobei der Stoßfänger (1) einen mittleren Bereich (12) hat, der sich über dem vorderen Querträger (5) erstrecken und im Bereich des freien Rands der Motorhaube des Fahrzeugs angeordnet sein kann, wobei der Stoßfänger (1) eine Verstärkung (3) des mittleren Bereichs (12) aufweist, wobei die Verstärkung (3) einen Querbalken (31) aufweist, der sich im Wesentlichen parallel zum mittleren Bereich (12) erstreckt, wobei der Stoßfänger (1) **dadurch gekennzeichnet ist, dass** der Querbalken (31) sich verformen kann, wenn eine Kraft größer als ein gegebener Wert auf ihn ausgeübt wird, und dass die Verstärkung (3) mindestens einen im Wesentlichen senkrechten Auflageschenkel (37) aufweist, der sich verformen kann, wenn eine Kraft größer als ein gegebener Wert auf ihn ausgeübt wird, dass der Auflageschenkel (37) einerseits den Querbalken (31) stützen und andererseits im Wesentlichen über oder auf dem vorderen Querträger (5) angeordnet sein kann, wodurch im Fall eines Aufpralls eines Fußgängers der Querbalken (31) sich zum Auflageschenkel (37) durchbiegt und die Kräfte auf den Auflageschenkel (37) überträgt, der sich verformt, indem er sich auf den vorderen Querträger (5) auflegt, um einen Teil der Energie des Aufpralls abzuleiten.

2. Stoßfänger (1) nach Anspruch 1, **dadurch gekennzeichnet, dass** er mindestens einen vorderen Schenkel (35) aufweist, der sich vor dem Auflageschenkel (37) erstreckt, um mit dem Auflageschenkel (37) einen Bogen zu bilden, der sich lotrecht zum Querbalken (31) erstreckt.

3. Stoßfänger (1) nach Anspruch 2, **dadurch gekennzeichnet, dass** er einen Verankerungsstreifen (39) im Wesentlichen parallel zum Querbalken (31) und fest mit dem freien Ende des vorderen Schenkels (35) verbunden aufweist, und dass der Verankerungsstreifen (39) die Montage der Verstärkung (3) hinter dem Stoßfänger (1) ermöglicht.

4. Stoßfänger (1) nach einem der Ansprüche 2 und 3, **dadurch gekennzeichnet, dass** der vordere Schenkel (35) und der Auflageschenkel (37) aus einem Stück bestehen.

5. Stoßfänger (1) nach einem der Ansprüche 2 bis 4, **dadurch gekennzeichnet, dass** der vordere Schenkel (35), der Auflageschenkel (37) und der Querbalken (31) aus einem einzigen Stück bestehen.

6. Stoßfänger (1) nach einem der vorhergehenden Ansprüche, **dadurch gekennzeichnet, dass** der Stoßfänger (1) eine steife Bewehrung (18) aufweist, die von einer elastischen Haut (17) bedeckt ist.

7. Stoßfänger (1) nach Anspruch 6, **dadurch gekennzeichnet, dass** der vordere Schenkel (35) direkt unter der Haut (17) angeordnet ist, und dass das freie Ende des vorderen Schenkels (35) auf einer von der Haut (17) geformten Randleiste (171) aufliegt.

8. Stoßfänger (1) nach einem der vorhergehenden Ansprüche, **dadurch gekennzeichnet, dass** er ein Stoßabsorptionselement (6) aufweist, das zwischen dem vorderen Stoßfänger (1) und dem vorderen Querträger (5) angeordnet werden kann.

9. Stoßfänger (1) nach einem der vorhergehenden Ansprüche, **dadurch gekennzeichnet, dass** der Querbalken (31) und der Auflageschenkel (37) eine Rippen aufweisende Struktur haben, die es ihnen ermöglicht, sich zu verformen.

## Claims

1. Front protective molding (1) for automotive vehicles, which can be mounted on the front of an automotive vehicle structure which comprises a front crossmember (5), said protective molding (1) having a central portion (12) which can be extended above said front crossmember (5) and which can be arranged at the level of the free edge of the hood of said vehicle, said protective molding (1) including a reinforcement (3) for said central portion (12), said reinforcement (3) comprising a crossbeam (31) which extends substantially parallel to said central portion (12), said protective molding (1) being **characterized in that** said crossbeam (31) can be deformed when a force greater than a given value is exerted on it and **in that** said reinforcement (3) comprises at least one support frame (37), substantially vertical, which can be deformed when a force greater than a given value is exerted on it, and **in that** said support frame (37) is capable, on the one hand, of supporting said crossbeam (31) and, on the other hand, of being arranged substantially above or on said front crossmember (5), by virtue of which, should a pedestrian be struck, said crossbeam (31) deflects toward said support frame (37) and transmits the forces to said support frame (37) which is deformed by bearing on said front crossmember (5), so as to dissipate a portion of the energy of the impact.

2. Protective molding (1) according to Claim 1, **characterized in that** it comprises at least one front frame (35), which extends in front of said support frame (37) to form, with said support frame (37), an arch which extends perpendicularly to said crossbeam (31).

3. Protective molding (1) according to Claim 2, **characterized in that** it comprises an anchoring strip (39), substantially parallel to said crossbeam (31) and securely attached to the free end of said front frame (35) and **in that** said anchoring strip (39) makes it possible to mount said reinforcement (3) behind said protective molding (1).

4. Protective molding (1) according to either one of Claims 2 and 3, **characterized in that** said front frame (35) and said support frame (37) form a single piece.

5. Protective molding (1) according to any one of Claims 2 to 4, **characterized in that** said front frame (35), said support frame (37) and said crossbeam (31) form one and the same piece.

6. Protective molding (1) according to any one of the preceding claims, **characterized in that** said protective molding (1) includes a rigid reinforcement (18), covered by a flexible skin (17).

7. Protective molding (1) according to Claim 6, **characterized in that** said front frame (35) is positioned directly under said skin (17) and **in that** the free end of said front frame (35) bears on a flange (171) formed by said skin (17).

8. Protective molding (1) according to any one of the preceding claims, **characterized in that** it comprises a shock-absorbing element (6), which can be positioned between said front protective molding (1) and said front crossmember (5).

9. Protective molding (1) according to any one of the preceding claims, **characterized in that** said crossbeam (31) and said support frame (37) have a structure comprising ribs which enable them to be deformed.
